# EUROPÄISCHE PATENTSCHRIFT

(11) **EP 1 336 549 B1**
(45) Veröffentlichungstag und Bekanntmachung des Hinweises auf die Patenterteilung: **11.03.2009**
(21) Anmeldenummer: 03002428.5
(22) Anmeldetag: 05.02.2003
(51) Int. Cl.: B62D 13/04, A01B 59/042

(54) **Gezogene landwirtschaftliche Maschine**
Towed agricultural machine
Machine agricole remorquée

(30) Priorität: 16.02.2002 DE 10206528
(43) Veröffentlichungstag der Anmeldung: 20.08.2003
(73) Patentinhaber: Amazonen-Werke H. Dreyer GmbH & Co. KG, 49205 Hasbergen (DE)
(72) Erfinder: Ehlen, Volker, 04229 Leipzig (DE); Oberheide, Friedrich, 49143 Bissendorf (DE)

(56) Entgegenhaltungen:
- EP-A- 0 239 344
- DE-A- 4 142 604
- FR-A- 2 492 331
- FR-A- 2 798 897
- US-A- 5 364 116
- US-B1- 6 179 315
- US-B1- 6 273 446

## Beschreibung

Die Erfindung betrifft eine gezogene landwirtschaftliche Maschine gemäß des Oberbegriffes des Patentanspruches 1.

Eine derartige Maschine ist beispielsweise durch die deutsche Offenlegungsschrift 41 42 604 bekannt. Diese Maschine ist als einachsige Verteilmaschine ausgebildet und weist eine gegenüber dem Rahmen der Verteilmaschine verschwenkbare Deichsel auf, so dass die Winkellage der Deichsel gegenüber dem Rahmen bei Kurvenfahrt über zwischen dem Rahmen und der Deichsel angeordnetem Stellzylinder veränderbar ist. Hierdurch kann ein spurgetreuer Nachlauf der Laufräder der Maschine in der Spur des die Maschine ziehenden Schleppers erreicht werden. Eine derartige Deichsellenkung hat sich in der Praxis bewährt. Jedoch ist mit dieser Lenkung bei einer ausreichenden Fahrsicherheit kein sehr enger Wendekreis möglich.

Der Erfindung liegt die Aufgabe zugrunde, mit einfachen Maßnahmen bei einer hohen Fahrstabilität und Fahrsicherheit einen derart engen Wenderadius zu ermöglichen, den die modernen Schlepper erreichen.

Diese Aufgabe wird erfindungsgemäß durch die kennzeichnenden Merkmale des Patentanspruches 1 gelöst. Infolge dieser Maßnahmen lässt sich durch die Achsschenkellenkung und durch die Deichsellenkungen, die miteinander kombiniert sind, ein sehr enger Wenderadius des Zuggespannes erreichen. Hierbei wird dennoch eine hohe Fahrstabilität und Fahrsicherheit erreicht. Das Zuggespann kann aufgrund der Doppellenkung (Achsschenkellenkung und Deichsellenkung) den sehr kleinen Wenderadius, den die modernen Schlepper erreichen, ebenfalls erreichen. Durch die Kombilenkung erreicht man somit den engen Schlepperwenderadius oder nähert sich auf diesen zumindest annähernd an.

Um eine koordinierte Lenkung von Achsschenkellenkung und Deichsellenkung zu erreichen, ist vorgesehen, dass die Steuer- und/oder Regeleinrichtung mit der der Deichsel zugeordneten Stelleinrichtung und der den Achsschenkeln zugeordneten Stellvorrichtung verbunden ist, dass über die Steuer- und/oder Regeleinrichtung die Stellvorrichtung und die Stelleinrichtung getrennt und/oder gleichzeitig ansteuerbar und entsprechend betätigbar sind.

Durch die FR 99 12 060 B1 ist eine gezogene Verteilmaschine mit einer Achsschenkellenkung bekannt.

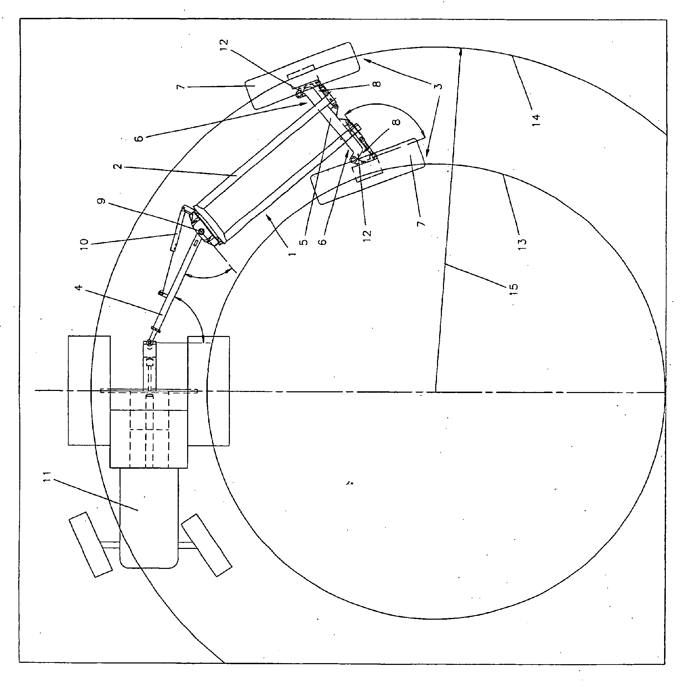

Weitere Einzelheiten der Erfindung sind der Beispielsbeschreibung und der Zeichnung zu entnehmen. Die Zeichnung zeigt das Durchfahren eines engen Wendekreises durch einen aus Anhängemaschine und Ackerschlepper bestehenden Zug in Draufsicht.

In der Zeichnung ist die gezogene landwirtschaftliche Verteilmaschine 1 nur mit ihrem Rahmen 2 und ihrem Fahrwerk 3 und der Deichsel 4 dargestellt. Der Rahmen 2 weist im hinteren Bereich die Achse 5 mit der Achsschenkellenkung 6 für die beiden Laufräder 7 auf. Der Achsschenkellenkung 6 ist ein als Hydraulikzylinder 8 ausgebildete Stellverrichtung zugeordnet, um die Laufräder 7 der Achsschenkellenkung 6 entsprechend anzusteuern. Auf der Vorderseite des Rahmens 2 ist mittels des Gelenkes 9 die Zugdeichsel 4 angeordnet. Das Gelenk 9 weist die aufrechte Schwenkachse auf. Zwischen dem Rahmen 2 und der Deichsel 4 ist die als Hydraulikzylinder 10 ausgebildete Stelleinrichtung angeordnet um die Deichsel 4 um die Schwenkachse entsprechend zu verschwenken. Mittels der im vorderen Bereich der Deichsel 4 befindlichen Zugöse ist die Deichsel 4 an eine Anhängevorrichtung, beispielsweise das Zugmaul eines Schleppers 11 anzuhängen. Auf dem Rahmen 2 der Verteilmaschine können ein Vorratstank und Verteileinrichtungen zum Verteilen des sich im Vorratsbehälter befindlichen Materiales angeordnet sein. Jedes Rad 7 ist mittels einer über eine aufrechte Achse aufweisenden Gelenkanordnung am Rahmen bewegbar angeordneten Achsschenkels 12 lenkbar angeordnet. Mittels der Stellvorrichtung 8 ist der Lenkwinkel des jeweiligen Rades 7 zur Rahmenlängsachse einzustellen.

Des weiteren ist eine Steuer- und/oder Regeleinrichtung vorgesehen. Die Steuer- und/oder Regeleinrichtung ist mit der der Deichsel 4 zugeordneten Stelleinrichtung 10 und der den Achsschenkeln 12 zugeordneten Stelleinrichtungen verbunden. Über die Steuer- und/oder Regeleinrichtung sind die Stellvorrichtung 8 und die Stellvorrichtung 10 getrennt und/oder gleichzeitig ansteuerbar und entsprechend betätigbar. Die gemeinsame Ansteuerung wird dann vorgenommen, wenn ein möglichst enger Wendekreis 13,14 mit Wenderadius 15 des Wendekreises 14 erreicht werden soll. Die getrennte Ansteuerung kann dann entsprechend nach den jeweiligen Einsatzverhältnissen sinnvoll sein.

## Patentansprüche

1. Gezogene landwirtschaftliche Verteilmaschine, wie beispielsweise Feldspritze, mit einer eine Zugdeichsel aufweisenden Anhängevorrichtung zum Ankuppeln an ein Zugfahrzeug, einem eine Achse mit Laufrädern aufweisenden Rahmen und am Rahmen angeordneten Verteil- und oder Arbeitselementen, wobei die Deichsel zur Schaffung der Deichsellenkung mittels eines eine aufrechte Achse aufweisenden Gelenkes an dem Rahmen bewegbar angeordnet und mittels einer zwischen dem Rahmen und der Deichsel angeordneten Stelleinrichtung in verschiedenen Stellungen zur Rahmenlängsachse bringbar ist, **dadurch gekennzeichnet, dass** jedes Rad (7) mittels eines über eine aufrechte Achse aufweisenden Gelenkanordnung am Rahmen (2) bewegbar angeordneten Achsschenkels (12) zur Schaffung der Achsschenkellenkung lenkbar angeordnet ist, dass jedem Achsschenkel (12) eine Stellvorrichtung (8) zugeordnet ist, mittels welcher der Lenkwinkel des jeweiligen Rades (7) zur Rahmenlängsachse (13) einstellbar ist, und dass die Deichsellenkung und die Achsschenkellenkung über eine Steuer- und Regeleinrichtung miteinander kombinierbar sind.

2. Maschine nach Anspruch 1, **dadurch gekennzeichnet, dass** eine Steuer -und/oder Regeleinrichtung vorgesehen ist, dass die Steuer und/oder Regeleinrichtung mit der der Deichsel (4) zugeordneten Stelleinrichtung (10) und der den Achsschenkeln (12) zugeordneten Stellvorrichtung (8) verbunden ist, dass über die Steuer- und/oder Regeleinrichtung die Stellvorrichtung (8) und die Stelleinrichtung (10) getrennt und/oder gleichzeitig ansteuerbar und entsprechend betätigbar sind.

## Claims

1. Agricultural distributor that can be towed, such as, for example an agricultural spraying machine, the said agricultural distributor having an attachment device that includes a drawbar for coupling to a tractor, a frame that includes an axle with running wheels and distributing and/or operating elements that are disposed on the frame, the drawbar, to create fifth-wheel steering, being disposed so as to be displaceable on the frame by means of a pivot joint that has an upright axis and being movable into various positions relative to the longitudinal axis of the frame by means of an adjusting device that is disposed between the frame and the drawbar, **characterised in that,** to create the steering knuckle steering, each wheel (7) is disposed so as to be steerable by means of a steering knuckle (12) that is disposed so as to be displaceable on the frame (2) via a pivot joint arrangement that has an upright axis, **in that** an adjusting device (8) is assigned to each steering knuckle (12), by means of which adjusting device the steering angle of the respective wheel (7) is adjustable relative to the longitudinal axis (13) of the frame, and **in that** the drawbar steering and the steering knuckle steering are combinable together by means of a control and regulating device.

2. Distributor according to claim 1, **characterised in that** a control and/or regulating device is provided, **in that** the control and/or regulating device is connected to the adjusting device (10) that is associated with the drawbar (4) and to the adjusting device (8) that is associated with the steering knuckle (12), **in that** the adjusting device (8) and the adjusting device (10) are activatable and correspondingly actuatable separately and/or at the same time by means of the control and / or regulating device.

## Revendications

1. Machine agricole distributrice, remorquée telle que par exemple un pulvérisateur agricole comportant :
- un dispositif de remorquage muni d'un timon de traction pour être attelé à un véhicule tracteur,
- un châssis avec un essieu muni de roues de roulement ainsi que des éléments de distribution et/ou de travail, portés par le châssis,
le timon étant relié de manière mobile au châssis par l'intermédiaire d'une articulation d'axe dressé, pour réaliser le guidage du timon, et une installation de réglage entre le châssis et le timon pour être mise dans différentes positions par rapport à l'axe longitudinal du châssis,
**caractérisée en ce que**
chaque roue (7) est montée de manière directrice par l'intermédiaire d'un bras d'essieu (12) monté mobile sur le châssis (2) par un dispositif d'articulation d'axe dressé, pour réaliser le guidage du bras d'essieu,
à chaque bras d'essieu (12) est associé un dispositif d'actionnement (8) qui règle l'angle de braquage de chaque roue (7) par rapport à l'axe longitudinal (13) du châssis, et
une installation de commande et de régulation combine le guidage du timon et le guidage des bras d'essieu.

2. Machine selon la revendication 1,
**caractérisée par**
une installation de commande et/ou de régulation,
l'installation de commande et/ou de régulation est reliée à l'installation d'actionnement (10) du timon (4) et au dispositif d'actionnement (8) associé au bras d'essieu (12),
le dispositif d'actionnement (8) et l'installation d'actionnement (10) sont commandés séparément et/ou simultanément par l'installation de commande et/ou de régulation et sont actionnés de façon correspondante.
